# EUROPEAN PATENT SPECIFICATION

(11) **EP 2 863 558 B1**
(45) Date of publication and mention of the grant of the patent: **09.05.2018**
(21) Application number: 13803502.7
(22) Date of filing: 14.06.2013
(51) Int. Cl.: H04B 11/00

(54) **AUDIO DATA TRANSMISSION METHOD, SYSTEM, TRANSMISSION DEVICE, AND ELECTRONIC SIGNATURE TOOL**
VERFAHREN ZUR ÜBERTRAGUNG VON AUDIODATEN, SYSTEM, ÜBERTRAGUNGSVORRICHTUNG UND ELEKTRONISCHES SIGNATURWERKZEUG
PROCÉDÉ DE TRANSMISSION DE DONNÉES AUDIO, SYSTÈME, DISPOSITIF DE TRANSMISSION, ET OUTIL DE SIGNATURE ÉLECTRONIQUE

(30) Priority: 16.06.2012 CN 201210204773
(43) Date of publication of application: 22.04.2015
(73) Proprietor: Tendyron Corporation, Beijing 100083 (CN)
(72) Inventor: LI, Dongsheng, Beijing 100083 (CN)
(74) Representative: Maiwald Patentanwalts GmbH
(86) International application number: PCT/CN2013/077079
(87) International publication number: WO 2013/185593

(56) References cited:
- EP-A1- 2 763 365
- WO-A1-2007/066137
- WO-A1-2012/058805
- WO-A2-2009/024784
- CN-A- 101 330 485
- CN-A- 102 104 580
- CN-A- 102 223 234
- CN-U- 202 940 816
- CN-Y- 2 506 284
- US-A1- 2008 304 362

## Description

### FIELD

Embodiments of the present invention generally relate to an electronic technique field, and more particularly, to an audio data transmission method, an audio data transmission system, an audio data transmission apparatus for a mobile terminal and an electronic signature token.

### BACKGROUND

In a current audio data transmission via an audio interface, different mobile terminals have different audio transmission characteristics. In order to be compatible with the audio transmission characteristics of different mobile terminals, an apparatus (such as an electronic signature token) communicating with the mobile terminal needs to try with audio data in different modulation modes automatically so as to find a most suitable modulation mode matched with each of the different mobile terminals.

Currently, there are few audio communication means, and consequently no suitable mode can be compatible with the communication between different mobile terminals and different electronic signature tokens.

Moreover, since both sides in the communication may not necessarily be fixed and can have their own different audio transmission characteristics, when the demodulation mode and the modulation mode not matched with each other are adopted during the audio data transmission, a data interaction speed may be reduced and it is easy for a distortion to occur in the interactive data.

CN 102223234 A discloses an electronic signature system and method based audio transmission.

WO 2007066137 A1 discloses a data transmission apparatus.

### SUMMARY

Embodiments of the present invention seek to solve at least one of the problems existing in the related art to at least some extent.

Aspects of the present invention are defined by the independent claims. Further embodiments are provided by the dependent claims.

A first object of the present invention is to provide an audio data transmission method, which can obtain a spectral characteristic of an audio data communication link rapidly, and thus a degree of distortion of interactive data is reduced greatly, a success rate of the data transmission is increased, and a quality of a data interaction is also improved. A second object of the present invention is to provide an audio transmission system. A third object of the present invention is to provide an audio data transmission apparatus for a mobile terminal. A fourth object of the present invention is to provide an electronic signature token.

In order to achieve the above objects, embodiments of a first aspect of the present invention provide an audio data transmission method, including:
generating by a first device a plurality of audio waveform data of different frequencies;
splicing by the first device the plurality of audio waveform data into an audio waveform data stream;
transmitting the audio waveform data stream to a second device in one transmission in a same time reference frame via an audio interface of the first device.

With the audio data transmission method according to embodiments of the present invention, the plurality of audio waveform data of different frequencies are spliced into the audio waveform data stream to perform the data interaction in one transmission, thus increasing a data interaction speed. Also, the spectral characteristic of the audio data communication link can be obtained rapidly, the degree of distortion of the interactive data is reduced greatly, the success rate of the data transmission is increased, and the quality of the data interaction is also improved.

In some embodiments, the same time reference frame means that a length of a starting moment and/or a stopping moment at a time period of a waveform of each frequency with respect to a predetermined reference moment is predetermined.

In some embodiments, the audio waveform data is in a waveform in a predetermined mode.

In some embodiments, a manner of the splicing is a splicing manner without a time interval or a splicing manner with a time interval.

In some embodiments, the first device is a mobile terminal and the second device is an electronic signature token.

Embodiments of a second aspect of the present invention provide an audio data transmission
system, including a first device and a second device connected with each other via an audio interface, in which the first device is configured to generate a plurality of audio waveform data of different frequencies, to splice the plurality of audio waveform data into an audio waveform data stream and to transmit the audio waveform data stream to the second device in one transmission in a same time reference frame via an audio interface of the first device.

With the audio data transmission system according to embodiments of the present invention, rapid interaction of the audio waveform data screams between the first device and the second device can be realized, thus increasing the speed of the data interaction, and the degree of distortion of the interactive data is greatly reduced, thus improving the quality of the data interaction.

In some embodiments, the same time reference frame means that a length of a starting moment and/or a stopping moment at a time period of a waveform of each frequency with respect to a predetermined reference moment is predetermined.

In some embodiments, the audio waveform data is in a waveform in a predetermined mode.

In some embodiments, a manner of the splicing is a splicing manner without a time interval or a splicing manner with a time interval.

In some embodiments, the first device is a mobile terminal and the second device is an electronic signature token.

Embodiments of a third aspect of the present invention provide an audio data transmission apparatus for a mobile terminal, including: a generating module configured to generate a plurality of audio waveform data of different frequencies; a splicing module configured to splice the plurality of audio waveform data into an audio waveform data stream; a transmitting module configured to transmit the audio waveform data stream to an electronic signature token in one transmission in a same time reference frame via an audio interface of the mobile terminal.

With the audio data transmission apparatus according to embodiments of the present invention, the data interaction between the audio data transmission apparatus and the electronic signature token can be implemented rapidly, thus improving the data interaction speed and saving time. Furthermore, a waveform distortion and a waveform decay of the data during the data interaction can be effectively controlled, thus ensuring the quality of the interactive data.

In some embodiments, the same time reference frame means that a length of a starting moment and/or a stopping moment at a time period of a waveform of each frequency with respect to a predetermined reference moment is predetermined.

In some embodiments, the audio waveform data is in a waveform in a predetermined mode.

In some embodiments, a manner of the splicing is a splicing manner without a time interval or a splicing manner with a time interval.

Embodiments of a fourth aspect of the present invention provide an electronic signature token, including: a generating module configured to generate a plurality of audio waveform data of different frequencies; a splicing module configured to splice the plurality of audio waveform data into an audio waveform data stream; a transmitting module configured to transmit the audio waveform data stream to a mobile terminal in one transmission in a same time reference frame via an audio interface of the mobile terminal.

With the electronic signature token according to embodiments of the present invention, the data interaction between the electronic signature token and the mobile terminal can be implemented rapidly, thus improving the data interaction speed and saving time. Furthermore, a waveform distortion and a waveform decay of the data during the data interaction can be effectively reduced, thus ensuring the quality of the interactive data.

In some embodiments, the same time reference frame means that a length of a starting moment and/or a stopping moment at a time period of a waveform of each frequency with respect to a predetermined reference moment is predetermined.

In some embodiments, the audio waveform data is in a waveform in a predetermined mode.

In some embodiments, a manner of the splicing is a splicing manner without a time interval or a splicing manner with a time interval.

Additional aspects and advantages of embodiments of present invention will be given in part in the following descriptions, become apparent in part from the following descriptions, or be learned from the practice of the embodiments of the present invention.

### BRIEF DESCRIPTION OF THE DRAWINGS

These and other aspects and advantages of embodiments of the present invention will become apparent and more readily appreciated from the following descriptions made with reference to the accompanying drawings, in which:
Fig. 1 is a flow chart of an audio data transmission method according to an embodiment of the present invention;
Fig. 2 is a schematic diagram of an audio data transmission method in a same time reference frame according to an embodiment of the present invention;
Fig. 3 is a schematic diagram of an audio data transmission system according to an embodiment of the present invention;
Fig. 4 is a schematic diagram of an audio data transmission apparatus for a mobile terminal according to an embodiment of the present invention; and
Fig. 5 is a schematic diagram of an electronic signature token according to an embodiment of the present invention.

### DETAILED DESCRIPTION

Reference will be made in detail to embodiments of the present disclosure. Embodiments of the present disclosure will be shown in drawings, in which the same or similar elements and the elements having same or similar functions are denoted by like reference numerals throughout the descriptions. The embodiments described herein according to drawings are explanatory and illustrative, not construed to limit the present disclosure.

Various embodiments and examples are provided in the following description to implement different structures of the present disclosure. In order to simplify the present disclosure, certain elements and settings will be described. However, these elements and settings are only by way of example and are not intended to limit the present disclosure. In addition, reference numerals may be repeated in different examples in the present disclosure. This repeating is for the purpose of simplification and clarity and does not refer to relations between different embodiments and/or settings. Furthermore, examples of different processes and materials are provided in the present disclosure. However, it would be appreciated by those skilled in the art that other processes and/or materials may be also applied. Moreover, a structure in which a first feature is "on" a second feature may include an embodiment in which the first feature directly contacts the second feature, and may also include an embodiment in which an additional feature is formed between the first feature and the second feature so that the first feature does not directly contact the second feature.

In the description of the present disclosure, unless specified or limited otherwise, it should be noted that, terms "mounted," "connected" and "coupled" may be understood broadly, such as electronic connection or mechanical connection, inner communication between two elements, direct connection or indirect connection via intermediary. These having ordinary skills in the art should understand the specific meanings in the present disclosure according to specific situations.

With reference to the following descriptions and drawings, these and other aspects of embodiments of the present disclosure will be distinct. In the descriptions and drawings, some particular embodiments are described in order to show means of the principles of embodiments according to the present disclosure, however, it should be appreciated that the scope of embodiments according to the present disclosure is not limited. On the contrary, embodiments of the present disclosure include all the changes, alternatives, and modifications falling into the scope of the spirit and principles of the attached claims.

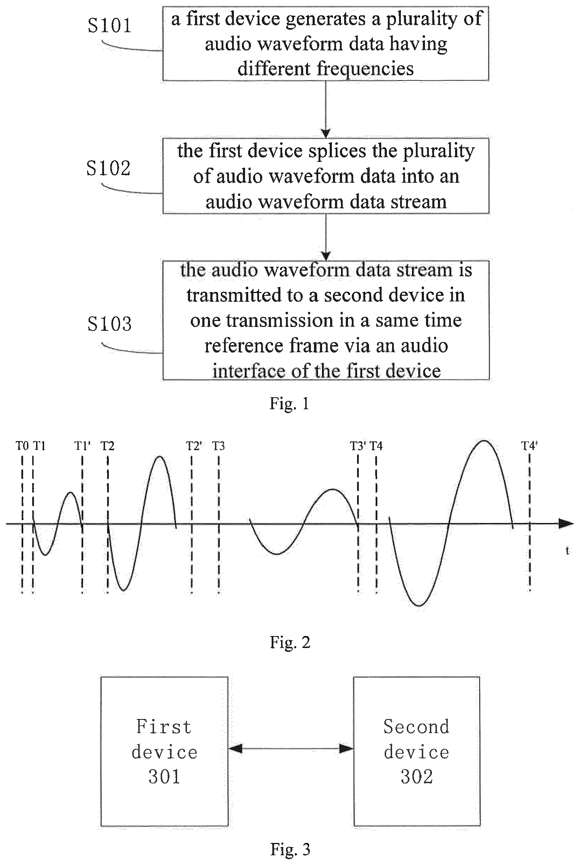

An audio data transmission method according to embodiments of a first aspect of the present invention will be described with reference to Figs. 1 and 2.

As shown in Fig. 1, the audio data transmission method includes following steps.

At step S101, a first device generates a plurality of audio waveform data of different frequencies.

In an embodiment of the present invention, the first device may be a mobile terminal. Specifically, the mobile terminal may be a mobile phone or a tablet PC, but is not limited to these. Specifically, the audio waveform data is in a waveform in a predetermined mode, for example, waveforms with the same amplitude and different frequencies.

At step S102, the first device splices the plurality of audio waveform data into an audio waveform data stream, i.e., connects a plurality of analog waveforms of different frequencies together. A manner of the splicing is a splicing manner without a time interval or a splicing manner with a time interval.

At step S103, the audio waveform data stream is transmitted to a second device in one transmission in a same time reference frame via an audio interface of the first device.

Specifically, in an embodiment of the present invention, the second device may be an electronic signature token such as an audio Key(i.e., an electronic signature token with an audio interface), but is not limited to this, in which the audio Key is an electronic signature token similar to a USB Key and has a different data transmission mode therefrom.

In an embodiment of the present invention, the same time reference frame means that: a length of a starting moment and/or a stopping moment at a time period of a waveform of each frequency with respect to a predetermined reference moment is predetermined.

Detailed descriptions will be presented with reference to Fig. 2.

For example, two waveforms with respective first and second frequencies are sent out in turn, a common reference moment on a time axis is determined as T0, a starting moment of a time period in which the waveform corresponding to the first frequency is located is set as T1, a length between T1 and T0 is predetermined; a starting moment of a time period in which the waveform corresponding to the second frequency is located is set as T2, a length between T2 and T0 is predetermined. Certainly, T2 is larger than T1 by this time.

Likewise, the length of the stopping moment of the time period in which the waveform corresponding to the each frequency is located with respect to the predetermined reference moment is predetermined. For example, the common reference moment on the time axis is determined as T0, a stopping moment of the time period in which the waveform corresponding to the first frequency is located is set as T1', a length between T1' and T0 is predetermined; a stopping moment of the time period in which the waveform corresponding to the second frequency is located is set as T2', a length between T2' and T0 is predetermined. Certainly, T2' is larger than T1' by this time.

Certainly, the starting moment T2 of the time period in which the waveform corresponding to the second frequency is located may be identical with the stopping moment T1' of the time period in which the waveform corresponding to the first frequency is located.

Likewise, the length of both the starting moment and stopping moment of the time period in which the waveform corresponding to the each frequency is located with respect to the predetermined reference moment may be predetermined.

Certainly, in the embodiment of the present invention, the predetermined reference moments may be identical or different.

Certainly, in the embodiment of the present invention, the waveform corresponding to the each frequency may be located anywhere in the time period.

For example: 1) a starting moment of a waveform corresponding to a frequency is identical with a starting moment of a time period in which the waveform corresponding to the frequency is located, and a stopping moment of the waveform corresponding to the frequency is identical with a stopping moment of the time period in which the waveform corresponding to the frequency is located, see T1-T1' shown in Fig. 2.
2) The starting moment of the waveform corresponding to the frequency is identical with the starting moment of the time period in which the waveform corresponding to the frequency is located, and the stopping moment of the waveform corresponding to the frequency is different from the stopping moment of the time period in which the waveform corresponding to the frequency is located, see T2-T2' shown in Fig. 2.
3) The starting moment of the waveform corresponding to the frequency is different from the starting moment of the time period in which the waveform corresponding to the frequency is located, and the stopping moment of the waveform corresponding to the frequency is identical with the stopping moment of the time period in which the waveform corresponding to the frequency is located, see T3-T3' shown in Fig. 2.
4) The starting moment of the waveform corresponding to the frequency is different from the starting moment of the time period in which the waveform corresponding to the frequency is located, and the stopping moment of the waveform corresponding to the frequency is different from the stopping moment of the time period in which the waveform corresponding to the frequency is located, see T4-T4' shown in Fig. 2. When the starting moment of the waveform corresponding to the frequency is different from the starting moment of the time period in which the waveform corresponding to the frequency is located, and the stopping moment of the waveform corresponding to the frequency is different from the stopping moment of the time period in which the waveform corresponding to the frequency is located, the starting moment of the waveform corresponding to the each frequency should be synchronized according to a synchronization head information thereof.

With the audio data transmission method according to embodiments of the present invention, the plurality of audio waveform data of different frequencies are spliced into the audio waveform data stream to perform the data interaction in one transmission, thus increasing a data interaction speed. Also, the spectral characteristic of the audio data communication link can be obtained rapidly, the degree of distortion of the interactive data is reduced greatly, the success rate of the data transmission is increased, and the quality of the data interaction is also improved.

An audio data transmission system according to embodiments of a second aspect of the present invention will be described in the following with reference to Fig. 3.

As shown in Fig. 3, the audio data transmission system includes a first device 301 and a second device 302 connected with each other via an audio interface. The first device 301 is configured to generate a plurality of audio waveform data of different frequencies, to splice the plurality of audio waveform data into an audio waveform data stream and to transmit the audio waveform data stream to the second device 302 in one transmission in a same time reference frame via an audio interface of the first device 301.

In an embodiment of the present invention, the same time reference frame means that: a length of a starting moment and/or a stopping moment at a time period of a waveform of each frequency with respect to a predetermined reference moment is predetermined.

Specifically, the audio waveform data is in a waveform in a predetermined mode, for example, waveforms with the same amplitude and different frequencies.

Specifically, in an embodiment of the present invention, the first device 301 is a mobile terminal and the second device 302 is an electronic signature token.

In an embodiment of the present invention, a manner of splicing the plurality of audio waveform data into an audio waveform data stream is a splicing manner without a time interval or a splicing manner with a time interval.

Specifically, for example, the first device 301 generates four audio waveform data A, B, C and D with different frequencies, and splices the four audio waveform data A, B, C and D with different frequencies into an audio waveform data scream, thus facilitating the data transmission in one transmission, reducing a number of times of the data transmission and improving the data interaction speed.

With the audio data transmission system according to embodiments of the present invention, the data interaction between the first device 301 and the second device 302 can be implemented rapidly, thus improving the data interaction speed. Furthermore, a waveform distortion and a waveform deformation of the data during the data interaction can be reduced greatly, thus improving the quality of the interactive data. Also, the spectral characteristic of the audio data communication link can be obtained rapidly.

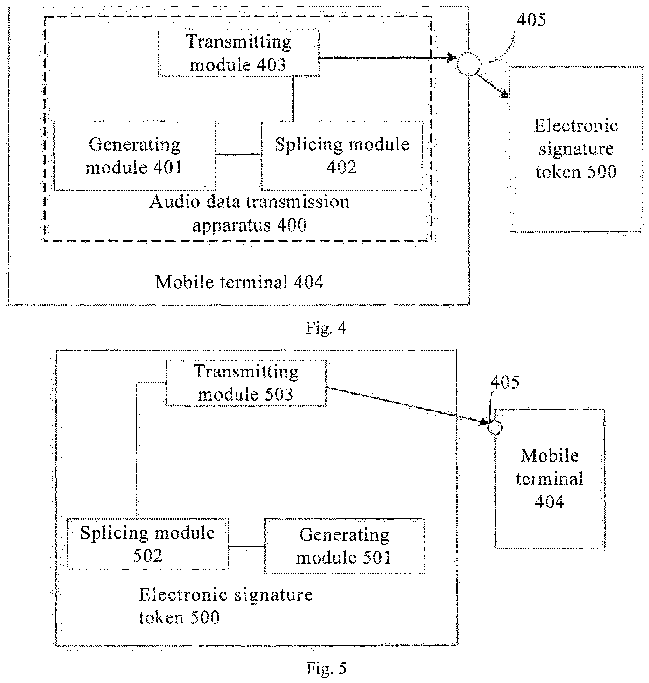

An audio data transmission apparatus 400 for a mobile terminal according to embodiments of a third aspect of the present invention will be described in the following with reference to Fig. 4.

As shown in Fig. 4, the audio data transmission apparatus 400 includes a generating module 401, a splicing module 402 and a transmitting module 403.

In an embodiment of the present invention, the generating module 401 is configured to generate a plurality of audio waveform data of different frequencies. The splicing module 402 is configured to splice the plurality of audio waveform data into an audio waveform data stream. The transmitting module 403 is configured to transmit the audio waveform data stream to an electronic signature token 500 in one transmission in a same time reference frame via an audio interface 405 of the mobile terminal 404.

In an embodiment of the present invention, a manner of the splicing is a splicing manner without a time interval or a splicing manner with a time interval. Furthermore, the same time reference frame means that: a length of a starting moment and/or a stopping moment at a time period of a waveform of each frequency with respect to a predetermined reference moment is predetermined.

Specifically, the audio waveform data is in a waveform in a predetermined mode, for example, waveforms with the same amplitude and different frequencies.

With the audio data transmission apparatus 400 for the mobile terminal 404 according to embodiments of the present invention, the data interaction between the audio data transmission apparatus 400 and the electronic signature token 500 can be implemented rapidly, thus improving the data interaction speed and saving time. Furthermore, a waveform distortion and a waveform decay of the data during the data interaction can be effectively controlled, thus ensuring the quality of the interactive data. Also, the spectral characteristic of the audio data communication link can be obtained rapidly.

An electronic signature token 500 according to embodiments of a fourth aspect of the present invention will be described in the following with reference to Fig. 5.

As shown in Fig. 5, the electronic signature token 500 includes a generating module 501, a splicing module 502 and a transmitting module 503.

In an embodiment of the present invention, the generating module 501 is configured to generate a plurality of audio waveform data of different frequencies. The splicing module 502 is configured to splice the plurality of audio waveform data into an audio waveform data stream. The transmitting module 503 is configured to transmit the audio waveform data stream to a mobile terminal 404 in one transmission in a same time reference frame via an audio interface 405 of the mobile terminal 404.

In an embodiment of the present invention, a manner of the splicing is a splicing manner without a time interval or a splicing manner with a time interval. Furthermore, the same time reference frame means that: a length of a starting moment and/or a stopping moment at a time period of a waveform c of each frequency with respect to a predetermined reference moment is predetermined.

Specifically, the audio waveform data is in a waveform in a predetermined mode, for example, waveforms with the same amplitude and different frequencies.

With the electronic signature token 500 according to embodiments of the present invention, the data interaction between the mobile terminal 404 and the electronic signature token 500 can be implemented rapidly, thus improving the data interaction speed and saving time. Furthermore, a waveform distortion and a waveform decay of the data during the data interaction can be effectively reduced, thus ensuring the quality of the interactive data. Also, the spectral characteristic of the audio data communication link can be obtained rapidly.

Any procedure or method described in the flow charts or described in any other way herein may be understood to comprise one or more modules, portions or parts for storing executable codes that realize particular logic functions or procedures. Moreover, advantageous embodiments of the present disclosure comprises other implementations in which the order of execution is different from that which is depicted or discussed, including executing functions in a substantially simultaneous manner or in an opposite order according to the related functions. This should be understood by those skilled in the art to which embodiments of the present disclosure belong.

The logic and/or step described in other manners herein or shown in the flow chart, for example, a particular sequence table of executable instructions for realizing the logical function, may be specifically achieved in any computer readable medium to be used by the instruction execution system, device or equipment (such as the system based on computers, the system comprising processors or other systems capable of obtaining the instruction from the instruction execution system, device and equipment and executing the instruction), or to be used in combination with the instruction execution system, device and equipment. As to the specification, "the computer readable medium" may be any device adaptive for including, storing, communicating, propagating or transferring programs to be used by or in combination with the instruction execution system, device or equipment. More specific examples of the computer readable medium comprise but are not limited to: an electronic connection (an electronic device) with one or more wires, a portable computer enclosure (a magnetic device), a random access memory (RAM), a read only memory (ROM), an erasable programmable read-only memory (EPROM or a flash memory), an optical fiber device and a portable compact disk read-only memory (CDROM). In addition, the computer readable medium may even be a paper or other appropriate medium capable of printing programs thereon, this is because, for example, the paper or other appropriate medium may be optically scanned and then edited, decrypted or processed with other appropriate methods when necessary to obtain the programs in an electric manner, and then the programs may be stored in the computer memories.

It is understood that each part of the present disclosure may be realized by the hardware, software, firmware or their combination. In the above embodiments, a plurality of steps or methods may be realized by the software or firmware stored in the memory and executed by
the appropriate instruction execution system. For example, if it is realized by the hardware, likewise in another embodiment, the steps or methods may be realized by one or a combination of the following techniques known in the art: a discrete logic circuit having a logic gate circuit for realizing a logic function of a data signal, an application-specific integrated circuit having an appropriate combination logic gate circuit, a programmable gate array (PGA), a field programmable gate array (FPGA), etc.

Those skilled in the art shall understand that all or parts of the steps in the above exemplifying method of the present disclosure may be achieved by commanding the related hardware with programs. The programs may be stored in a computer readable storage medium, and the programs comprise one or a combination of the steps in the method embodiments of the present disclosure when run on a computer.

In addition, each function cell of the embodiments of the present disclosure may be integrated in a processing module, or these cells may be separate physical existence, or two or more cells are integrated in a processing module. The integrated module may be realized in a form of hardware or in a form of software function modules. When the integrated module is realized in a form of software function module and is sold or used as a standalone product, the integrated module may be stored in a computer readable storage medium.

The storage medium mentioned above may be read-only memories, magnetic disks or CD, etc.

Reference throughout this specification to "an embodiment," "some embodiments," "an example," "a specific example," or "some examples," means that a particular feature, structure, material, or characteristic described in connection with the embodiment or example is included in at least one embodiment or example of the present disclosure. The appearances of the phrases throughout this specification are not necessarily referring to the same embodiment or example of the present disclosure. Furthermore, the particular features, structures, materials, or characteristics may be combined in any suitable manner in one or more embodiments or examples.

## Claims

1. An audio data transmission method, comprising:
generating by a first device (301) a plurality of audio waveform data of different frequencies;
splicing by the first device (301) the plurality of audio waveform data into an audio waveform data stream;
transmitting the audio waveform data stream to a second device (302) in one transmission via an audio interface (405) of the first device according to a format in which an interval between a starting moment and/or a stopping moment of each of the audio waveform data of different frequencies and a predetermined reference moment is predetermined.

2. The method according to claim 1, wherein the audio waveform data is in a waveform in a predetermined mode.

3. The method according to any one of claims 1-2, wherein a manner of the splicing is a splicing manner without a time interval between a last stopping moment and a next starting moment or a splicing manner with a time interval between a last stopping moment and a next starting moment.

4. The method according to any one of claims 1-3, wherein the first device (301) is a mobile terminal (404) and the second device (302) is an electronic signature token (500).

5. An audio data transmission apparatus (400) for a mobile terminal, comprising:
a generating module (401) configured to generate a plurality of audio waveform data of different frequencies;
a splicing module (402) configured to splice the plurality of audio waveform data into an audio waveform data stream;
a transmitting module (403) configured to transmit the audio waveform data stream to an electronic signature token (500) in one transmission via an audio interface (405) of the mobile terminal (404) according to a format in which an interval between a starting moment and/or a stopping moment of each of the audio waveform data of different frequencies and a predetermined reference moment is predetermined.

6. The apparatus according to claim 5, wherein the audio waveform data is in a waveform in a predetermined mode.

7. The apparatus according to any one of claims 5-6, wherein a manner of the splicing is a splicing manner without a time interval between a last stopping moment and a next starting moment or a splicing manner with a time interval between a last stopping moment and a next starting moment.

8. An electronic signature token (500), comprising:
a generating module (501) configured to generate a plurality of audio waveform data of different frequencies;
a splicing module (502) configured to splice the plurality of audio waveform data into an audio waveform data stream;
a transmitting module (503) configured to transmit the audio waveform data stream to a mobile terminal (404) in one transmission via an audio interface (405) of the mobile terminal (404) according to a format in which an interval between a starting moment and/or a stopping moment of each of the audio waveform data of different frequencies and a predetermined reference moment is predetermined.

9. The electronic signature token (500) according to claim 8, wherein the audio waveform data is in a waveform in a predetermined mode.

10. The electronic signature token (500) according to any one of claims 8-9, wherein a manner of the splicing is a splicing manner without a time interval between a last stopping moment and a next starting moment or a splicing manner with a time interval between a last stopping moment and a next starting moment.

11. An audio data transmission system, comprising:
an audio data transmission apparatus (400) for a mobile terminal (404) according to any one of claims 5-7; and
an electronic signature token (500) according to any one of claims 8-10 and connected with the audio data transmission apparatus (400) via an audio interface (405).

## Patentansprüche

1. Ein Audiodatenübertragungsverfahren, umfassend:
Erzeugen einer Mehrzahl von Audiowellenformdaten verschiedener Frequenzen durch eine erste Vorrichtung (301);
Spleißen der mehreren Audiowellenformdaten durch die erste Vorrichtung (301) in einen Audiowellenformdatenstrom;
Übertragen des Audio-Wellenformdatenstroms an eine zweite Vorrichtung (302) in einer Übertragung über eine Audioschnittstelle (405) der ersten Vorrichtung gemäß einem Format, in dem ein Intervall zwischen einem Startmoment und / oder einem Stoppmoment und einem vorbestimmten Referenzmoment vorbestimmt ist.

2. Das Verfahren nach Anspruch 1, wobei ferner die Audiowellenformdaten in einer Wellenform in einem vorbestimmten Modus sind.

3. Das Verfahren nach einem der Ansprüche 1 bis 2, wobei ferner eine Art des Spleißens eine Spleißweise ohne ein Zeitintervall zwischen einem letzten Stoppzeitpunkt und einem nächsten Startmoment oder einer Spleißweise mit einem Zeitintervall zwischen einem letzten Stopp ist Moment und ein nächster Startmoment.

4. Das Verfahren nach einem der Ansprüche 1 bis 3, wobei ferner die erste Vorrichtung (301) ein mobiles Endgerät (404) ist und die zweite Vorrichtung (302) ein elektronisches Signatur-Token (500) ist.

5. Ein Audiodatenübertragungsgerät (400) für ein mobiles Endgerät, das Audiodatenübertragungsgerät ferner umfassend:
ein Erzeugungsmodul (401), das konfiguriert ist, um eine Vielzahl von Audiowellenformdaten verschiedener Frequenzen zu erzeugen;
ein Spleißmodul (402), das konfiguriert ist, um die Vielzahl von Audiowellenformdaten in einen Audiowellenformdatenstrom zu spleißen;
ein Übertragungsmodul (403), das konfiguriert ist, um den Audiowellenformdatenstrom zu einem elektronischen Signatur-Token (500) in einer Übertragung über eine Audioschnittstelle (405) des mobilen Endgeräts (404) gemäß einem Format zu übertragen, in dem ein Intervall zwischen einem Start Moment und / oder einem Stopp-Moment einerseits und einem vorbestimmten Referenz-Moment andererseits vorbestimmt ist.

6. Die Vorrichtung nach Anspruch 5, wobei die Audiowellenformdaten in einer Wellenform in einem vorbestimmten Modus vorliegen.

7. Die Vorrichtung nach einem der Ansprüche 5 bis 6, wobei eine Art des Spleißens eine Spleißweise ohne ein Zeitintervall zwischen einem letzten Stopp-Moment und einem nächsten Start-Moment oder einer Spleiß-Art mit einem Zeitintervall zwischen einem letzten Stopp ist Moment und ein nächster Startmoment.

8. Ein Elektronisches Signatur-Token (500), umfassend:
ein Erzeugungsmodul (501), das konfiguriert ist, um eine Vielzahl von Audiowellenformdaten verschiedener Frequenzen zu erzeugen;
ein Spleißmodul (502), das konfiguriert ist, um die Mehrzahl von Audiowellenformdaten in einen Audiowellenformdatenstrom zu spleißen; und
ein Übertragungsmodul (503), das konfiguriert ist, um den Audiowellenformdatenstrom an ein mobiles Endgerät (404) in einer Übertragung über eine Audioschnittstelle (405) des mobilen Endgeräts (404) gemäß einem Format zu übertragen, in dem ein Intervall zwischen einem Startmoment und / oder einem Stoppmoment einerseits und einem vorbestimmten Referenzmoment andererseits vorbestimmt ist.

9. Das elektronische Signatur-Token (500) nach Anspruch 8, wobei die Audiowellenformdaten in einer Wellenform in einem vorbestimmten Modus vorliegen.

10. Das elektronische Signatur-Token (500) nach einem der Ansprüche 8 bis 9, wobei eine Art des Spleißens eine Spleißweise ist ohne ein Zeitintervall zwischen einem letzten Stopp-Moment und einem nächsten Start-Moment oder einer Spleiß-Art mit einer Zeit ist Intervall zwischen einem letzten Stopp-Moment und einem nächsten Start-Moment.

11. Ein Audiodatenübertragungssystem, umfassend:
eine Audiodatenübertragungsvorrichtung (400) für ein mobiles Endgerät (404) nach einem der Ansprüche 5-7; und ein elektronisches Signatur-Token (500) nach einem der Ansprüche 8-10, welches über eine Audio-Schnittstelle (405) mit der Audiodaten-Übertragungsvorrichtung (400) verbunden ist.

## Revendications

1. Procédé de transmission de données audio, comprenant les étapes suivantes :
produire, au moyen d'un premier dispositif (301), une pluralité de données de formes d'ondes audio de différentes fréquences ;
combiner, au moyen du premier dispositif (301), la pluralité de données de formes d'ondes audio en un flux de données de formes d'ondes audio ;
transmettre le flux de données de formes d'ondes audio à un second dispositif (302) en une transmission par le biais d'une interface audio (405) du premier dispositif selon un format dans lequel un intervalle entre un moment de début et/ou un moment d'arrêt de chacune des données de formes d'ondes audio de différentes fréquences et un moment de référence prédéterminé est prédéterminé.

2. Procédé selon la revendication 1, dans lequel les données de forme d'onde audio sont dans une forme d'onde selon un mode prédéterminé.

3. Procédé selon l'une quelconque des revendications 1 et 2, dans lequel une forme de combinaison consiste en une forme de combinaison sans intervalle de temps entre un dernier moment d'arrêt et un moment de début suivant ou en une forme de combinaison avec un intervalle de temps entre un dernier moment d'arrêt et un moment de début suivant.

4. Procédé selon l'une quelconque des revendications 1 à 3, dans lequel le premier dispositif (301) est un terminal mobile (404) et le second dispositif (302) est un jeton de signature électronique (500).

5. Appareil de transmission de données audio (400) destiné à un terminal mobile, comprenant :
un module générateur (401) conçu pour produire une pluralité de données de formes d'ondes audio de différentes fréquences ;
un module de combinaison (402) conçu pour combiner la pluralité de données de formes d'ondes audio en un flux de données de formes d'ondes audio ;
un module de transmission (403) conçu pour transmettre le flux de données de formes d'ondes audio à un jeton de signature électronique (500) en une transmission par le biais d'une interface audio (405) du terminal mobile (404) selon un format dans lequel un intervalle entre un moment de début et/ou un moment d'arrêt de chacune des données de formes d'ondes audio de différentes fréquences et un moment de référence prédéterminé est prédéterminé.

6. Appareil selon la revendication 5, dans lequel les données de forme d'onde audio sont dans une forme d'onde selon un mode prédéterminé.

7. Appareil selon l'une quelconque des revendications 5 et 6, dans lequel une forme de combinaison consiste en une forme de combinaison sans intervalle de temps entre un dernier moment d'arrêt et un moment de début suivant ou en une forme de combinaison avec un intervalle de temps entre un dernier moment d'arrêt et un moment de début suivant.

8. Jeton de signature électronique (500) comprenant :
un module générateur (501) conçu pour produire une pluralité de données de formes d'ondes audio de différentes fréquences ;
un module de combinaison (502) conçu pour combiner la pluralité de données de formes d'ondes audio en un flux de données de formes d'ondes audio ;
un module de transmission (503) conçu pour transmettre le flux de données de formes d'ondes audio à un terminal mobile (404) en une transmission par le biais d'une interface audio (405) du terminal mobile (404) selon un format dans lequel un intervalle entre un moment de début et/ou un moment d'arrêt de chacune des données de formes d'ondes audio de différentes fréquences et un moment de référence prédéterminé est prédéterminé.

9. Jeton de signature électronique (500) selon la revendication 8, dans lequel les données de forme d'onde audio sont dans une forme d'onde selon un mode prédéterminé.

10. Jeton de signature électronique (500) selon l'une quelconque des revendications 8 et 9, dans lequel une forme de combinaison consiste en une forme de combinaison sans intervalle de temps entre un dernier moment d'arrêt et un moment de début suivant ou en une forme de combinaison avec un intervalle de temps entre un dernier moment d'arrêt et un moment de début suivant.

11. Système de transmission de données audio, comprenant :
un appareil de transmission de données audio (400) destiné à un terminal mobile (404) selon l'une quelconque des revendications 5 à 7 ; et
un jeton de signature électronique (500) selon l'une quelconque des revendications 8 à 10 et connecté à l'appareil de transmission de données audio (400) par le biais d'une interface audio (405).
